# EUROPEAN PATENT SPECIFICATION

(11) **EP 0 942 826 B1**
(45) Date of publication and mention of the grant of the patent: **17.09.2003**
(21) Application number: 98952677.7
(22) Date of filing: 01.10.1998
(51) Int. Cl.: B32B 5/24, B32B 7/10, D01D 5/247, D04H 1/54, D04H 3/14, D01F 8/00

(54) **WATERPROOF, BREATHABLE LAMINATE**
WASSERDICHTER, ATMUNGSFÄHIGER MEHRSCHICHTWERKSTOFF
TISSU LAMINE RESPIRANT ET IMPERMEABLE A L'EAU

(30) Priority: 01.10.1997 EP 97117071
(43) Date of publication of application: 22.09.1999
(73) Proprietor: W.L. GORE & ASSOCIATES GmbH, 85640 Putzbrunn (DE)
(72) Inventor: HOTTNER, Martin, D-83052 Bruckmühl (DE)
(74) Representative: Shanks, Andrew
(86) International application number: EP9806236
(87) International publication number: WO99016616

(56) References cited:
- EP-A- 0 696 654
- WO-A-96/23915
- GB-A- 2 282 101
- US-A- 4 197 345

## Description

### Field of the Invention

The invention relates to a laminate comprising a waterproof, breathable functional layer onto which is laminated a knitted or woven textile layer.

### Prior Art

High technology apparel garments made of waterproof, windproof but breathable textile laminates are state of the art. These laminates contain a waterproof, windproof and breathable membrane onto which is laminated at least one textile layer.

The joining together of two textile laminates present a problem if the seam at which the two textile laminates are to be sealed is to be made waterproof. Various methods have been tried. For example, W.L.Gore & Associates has developed a method in which two GORE-TEX® laminates are heat sealed at a seam using a GORE-SEAM® seam sealing tape.

The prior art discloses a number of seam-forming methods involving the fusion of a thin strip of thermoplastic material to bind two layers of textile materials together and thus form a seam. These are disclosed, for example, in US-A-3 387 307 (Blatz) assigned to Handgards, Inc. A similar method is taught in GB-A-1 465 343 in which a thin thermoplastic strip is placed between two fabric pieces to form the seam.

US-A-3 625 790 (Ayres) teaches a glove made of a laminate of an elastic fabric and a thermoplastic layer. Two pieces of a laminate are welded together to form a glove in which the seams are formed by fusion of the thermoplastic layers using dielectric heating means.

The use of electromagnetic waves at radio frequencies to form seams limited to those materials textiles which incorporate materials having dipolar molecules, such as polyvinyl chloride (PVC) or polyurethanes (PU).

Other prior art is known in which the laminates are adhered together using adhesives. European Patent EP-B- 0 345 730 (Kleis) assigned to W.L.Gore & Associates GmbH teaches the use of adhesive beads to produce the seams in a glove or other clothing application. Glove insert products made according to this invention are available from W.L.Gore & Associates GmbH in Feldkirchen, Germany, under the trade mark DIRECT GRIP®. In order to ensure absolute waterproofness of the seams, it is necessary for the adhesive to penetrate the whole depth of the textile layer up to the membrane. In particular for voluminous textile layer, the seams have to be glued over a wide area. The seams thus produced are relatively stiff and uncomfortable.

US-A-5 003 902 describes a seam construction for use on protective clothing which involves overlapping the fabric pieces and bonding them together by use of a melt-adhesive film between them. A liquid-proof thread is sown through the overlap in order to secure the two pieces of fabric to each other. The completed seam is then heated to melt-bond the adhesive film to the fabric pieces and to seal any apertures left by the sewing thread.

One of the problems encountered with the prior art seam adhesive sealing methods for waterproof laminates is that the seams have had to be fairly wide in order to ensure that the seams are waterproof. This reduces the comfort of the garment to the wearer. In, for example, sock or glove applications, the width of the seams is particularly noticeable. Moreover in these applications, the seams are exposed to a high degree of mechanical stress and may thus be damaged after a period of use. Some attempts have been made at producing thinner seams. However, these have not been durable. In particular the thin seams produced in this manner have not been able to withstand longitudinal stress, i.e. stresses cause by extension in the direction of the seam.

The problem of seam width is particularly marked in those laminates which are made of woven or knitted textile layers since these textile layers are much thicker than non-woven textile layers. The woven or knitted textile layers comprise yarns formed of a bundle of fibres. Within the yarns, multiple air spaces are present which have to be sealed to obtain a waterproof seam. Using the teachings of the above-mentioned EP '730 patent, for example, a relatively thin seam of approximately 2-3 mm width can be produced when the laminate has a non-woven textile layer. The non-woven textile layer is only around 0.2-0.3 mm thick. Thus the adhesive beads need only penetrate this distance to reach the membrane and accordingly form the waterproof seam. However, the knitted or woven textile layer in a laminate is much thicker (typically above 1 mm). Experiments have shown that it is then necessary to have a seam of between 3 mm and 4 mm in order to achieve sufficient waterproofness of the seams in garments or gloves having such a knitted or woven textile layer as the adhesive spreads out through the textile layer whilst penetrating through the textile layer to reach the membrane.

### Summary of the Invention

It is therefore an object of this invention to improve the comfort of the seams in garments made of waterproof, breathable laminates having a knitted or woven textile layer.

It is therefore an object of this invention to reduce the width of the seams in garments made of waterproof, breathable laminates having a knitted or woven textile layer.

It is therefore an object of this invention to produce long-lasting, durable seams in garments made of waterproof, breathable laminates having a knitted or woven textile layer.

These and other objects of the invention are addressed by providing a laminate with a waterproof and breathable functional layer on which is laminated a second woven or knitted textile layer comprising at least a first component and a second component. The first component is made of a material which is stable to a first temperature and the second component is made of a material which melts at a second temperature. The first temperature is higher than the second temperature. Such a laminate can be locally heated in the region of the seam to a temperature higher than the second temperature but lower than the first temperature. The second component melts and provides an adhesive for joining the laminate to another substrate or a laminate. The first component remains stable and provides structure to the seam.

Doument EP-A-0 696 654 discloses a laminate comprising at least one layer of a textile structure which can be a woven or knitted fabric and which comprises linear low density polyethylene fibres and higher melting fibres, said layer being laminated to at least one layer of another textile structure.

Laminates having the thinner non-woven textile layer are known from US-A-5 662 978 (Brown et al.) assigned to Kimberly-Clark Worldwide, Inc. In these laminates conjugate spunbound fibres of polypropylene and polyethylene are used to form the non-woven textile layer. This textile layer is laminated to a polyolefin film, particularly polyethylene. The laminates formed according to the teachings of this patent are used for manufacturing a protective covers and not for the production of articles of clothing. There are no teachings in this patent that the laminate of this invention can be used to form comfortable and hard-wearing seams used in the production of articles of clothing.

A similar laminate having a non-woven textile layer is further known from US-A- 5 503 907 (Gessner) assigned to Fiberweb North America, Inc., in which the non-woven textile layer of multi-component fibres is laminated to a microporous layer. The lower melting component of the multi-component fibre taught in this patent application is used to form the bond of the textile layer with the microporous layer. The higher melting component retains its substantially continuous fibrous form to provide a strengthening and reinforcing function in the laminate. There are no teachings in this patent concerning the production of seams from laminates used in clothing applications.

Similarly German Patent DE-C-196 32 312 (Tebbe) teaches a glove made of a laminate of a polypropylene foil onto which is laminated a textile layer of cotton or cellulose. The textile layer further includes polypropylene fibres in order to improve the adhesion between the polypropylene foil and the textile layer. The glove is made by welding two pieces of laminate cut on the polypropylene foil side into glove shapes together by radio frequency welding. In this example, the textile layer is placed on the exterior of the glove and the polypropylene foil is on the inside of the glove. The textile layer thus does not participate in the welding together of the two textile laminates.

The seams formed from the laminates of the invention are typically sufficiently waterproof that they are able to withstand a water entry pressure of at least 0.07 bar and preferably at least 0.13 bar according to the suter test described below. They have a width of less than 3mm.

In a preferred laminate of the invention, the second (low melting point) component is meltable at a temperature in the range from 80ºC to 170ºC whilst the first (high melting point) component is stable to a temperature of at least 140ºC. For a reliable seam to be formed the difference in temperature between the first temperature and the second temperature is usually at least 20ºC.

According to a preferred embodiment of the invention, the first component is selected from the group of polymers comprising polypropylene and polyamide 6.6. Preferably, the first component is polypropylene, which may be treated to be anti-bacterial.

In one embodiment of the invention, the second layer further includes a propellant which is activatable by activation means. On activation this propellant produces a gas which in combination with the melted second component provides a foam-like substance with closed cells. The closed cells ensure that the seam remains waterproof but the seam is resilient but also "spongy" and thus soft. The seam is therefore comfortable for the wearer of apparel made from the laminate.

According to one embodiment of the invention the second layer is composed of a plurality of yarns in the form of strands, filaments, threads or fibres. The second component in the second layer may be a thermoplastic which is selected from the group of thermoplastics comprising co-polyester, polyamide, polybutyleneterephthalate or co-polyamide. In the preferred embodiment of the invention the second component is a polyolefin including polypropylene or polyethylene; or polyamide 6 polymer.

The yarn in the second layer has in one embodiment a bicomponent structure comprising the first component and the second component. This structure may be either a cover-core structure, wherein the second component forms the cover, an "islands-in-the-sea" structure or a "side-by-side" structure. In a further embodiment of the invention, the yarn is formed from a blend of fibres or filaments.

In the embodiment of the invention with a propellant, the propellant is activated at a third temperature, the third temperature being intermediate between the second temperature and the first temperature. The propellant can be an integral part of the second component and is selected from the group of propellants consisting of azodicarbonamide, ammonium hydrogen carbonate, toluolsulfohydrazin or diazoaminobenzol. In the preferred embodiment of the invention the propellant is azodicarbonamide.

The functional layer included in the laminate is usually a membrane or a film. The functional layer may be selected from the group of materials consisting of polyester, polyurethane, polyvinylchloride (PVC), polytetrafluoroethylene or polyolefins. Preferably the functional layer is made from expanded PTFE. Expanded PTFE is known to be very waterproof and highly breathable. It may provide the laminate with a water vapour transmission rate (Ret) of less than 150 (m².Pa)/W and a water entry pressure of greater than 0.13 bar.

Embodiment of the invention will now be described by way of example only.

### Description of the Drawings

- Fig. 1: shows a textile laminate of the invention.
- Fig. 2: shows a method of manufacture of the composite layer of the textile laminate.
- Fig. 3: shows a method of lamination of textiles onto the composite layer of the textile laminate.
- Fig. 4: shows the method of formation of a seal between two textile laminates according to the invention.
- Fig. 5: shows an embodiment of the invention in which the bicomponent layer is fused to the backer fabric.
- Fig. 6: shows an embodiment of the invention in which the textile laminate is used as a seam sealing tape.

### Definitions and Test Methods

### Waterproofness

Waterproof as used herein is meant having water-penetration-resistance (hydrostatic resistance) of 0.13 bar or more. This measurement is carried out on laminates by placing a test sample of the laminate with an area of 100 cm² under increasing water pressure. For this purpose, distilled water with a temperature of 20±2°C is used and the rate of increase of the water pressure was 60±3 cmH₂O/min. The water penetration resistance of the sample is then the pressure at which water appears on the opposite side of the sample. The exact method of carrying out this test is given in the ISO Standard No. 811 from 1981.

The measurement is carried out on seams by the so-called suter test in which a test sample of the laminate including the seam is stretched over a holder. Distilled water with a temperature of 20±2°C was placed under a pressure of 0.13 bar on one side of the seam and the test sample left for at least four minutes. The other side of the seam was investigated using a filter paper to see whether water penetration through the seam had occurred.

### Water Vapour Permeable

Water vapour permeable as used herein is meant having a water-vapour-transmission rate (Ret) of under 150 (m².Pa) / W. The water vapour transmission rate is measured using the Hohenstein MDM Dry Method which is explained in the Standard-Prüfvorschrift (Standard Test Rules) No. BPI 1.4 dated September 1987 and issued by the Bekleidungsphysiologisches Instituts e.V. Hohenstein, Germany.

### Weight of the fabric

The weight of the fabric was determined using a 8.9 cm diameter circular sample which had been conditioned at 24±2°C and 65±2% relative humidity prior to testing. In the sampling pattern used, five specimens were tested and the mean of the five results together with the standard deviation was calculated. Any balance accurate to 0.01 g with a draft cover can be used. Further details of the test method are given in ASTM D 3776-96 Option C.

### Thickness of the fabric

The so-called Snap Gauge Method was used according to ASTM D 1777-64 (re-approved 1975) using a Peacock 20-360 Snap Gauge (M-213) tester. A specimen of at least 5.08 x 5.08 cm was used which been conditioned at 24±2°C and 65±2% relative humidity prior to testing. The presser foot of the tester was lowered onto the specimen without impact. After five seconds a reading was taken. In the sampling pattern used, five specimens were tested and the mean of the five results together with the standard deviation was calculated.

### Functional Layer

The term functional layer is used to denote a layer which had the properties that it is both waterproof and water-vapour permeable.

### Yarn

The term yarn is used in the description is used to describe the continuous strands of material which are made into the textile. It includes strands, filaments, fibres and the like.

### Detailed Description of an Embodiment of the Invention

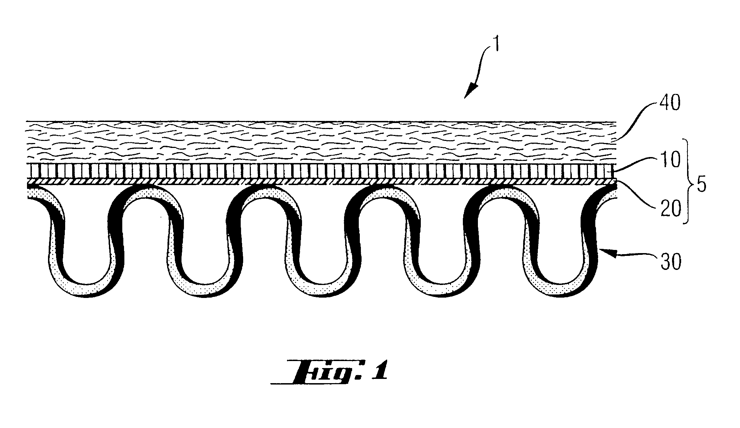

Fig. 1 shows a textile laminate 1 produced in accordance with this invention. The laminate comprises a composite layer 5 formed from a porous polymeric layer 10 and a continuous non-porous hydrophilic water vapour permeable polymer layer 20. On the first side of the composite layer 5 a knitted or woven bicomponent strand layer 30 comprising one or more bicomponent yarns is placed and on the second side of the composite layer is a backer fabric 40 is placed.

The porous polymeric layer 10 used in this invention is a microporous polymer membrane having a microscopic structure of open, interconnecting micro voids. It exhibits air permeability and as such imparts, or does not impair, water vapour permeability. The microporous membrane used in the laminate 5 described herein is typically of a thickness of 5 µm to 125 µm, most preferably of the order of about 5 µm to 25 µm. The useful polymers of the microporous membrane material include plastic polymers as well as elastomeric polymers. Examples of suitable polymers include polyesters, polyamide, polyolefins, polyketones, polysulfones, polycarbonates, fluoropolymers, polyacrylates, polyurethanes, copolyetheresters, co-polyetheramides and the like. The preferred polymers are plastic polymers.

The preferred microporous polymer membrane material is expanded microporous polytetrafluoroethylene (PTFE). These materials are characterised by a multiplicity of open, interconnecting microscopic voids, high void volume, high strength, soft, flexible, stable chemical properties, high water vapour transfer and a surface that exhibits good contamination control characteristics. US Patents US-A- 3 953 566 and US-A-4 187 390 describe the preparation of such microporous expanded polytetrafluoroethylene membranes and are incorporated herein by reference.

The continuous water vapour permeable polymer layer 20 is a hydrophilic polymer. The hydrophilic layer selectively transports water by diffusion but does not support pressure-driven liquid or air flow. Therefore moisture, i.e. water vapour, is transported but the continuous layer of the polymer precludes the passage of such things as air-borne particles, micro-organisms, oils or other contaminants. This characteristic imparts to the textile including the polymer layer 20 and in turn to articles made from it, such as socks or gloves, good contamination control characteristics by functioning as a barrier to contaminants of all sizes. Furthermore the water vapour transmitting characteristics of the material allow for comfort characteristics to the wearer.

The continuous water vapour permeable polymer layer 20 is typically of a thickness of between 5 µm and 50 µm, preferably between about 10 µm and 25 µm. This thickness has been found to be a good practical balance to yield satisfactory durability, continuity and rate of water vapour transmission.

Although not limited to them, the continuous water-vapour permeable polymers most useful herein are those of the polyurethane family, the silicone family, the co-polyetherester family or the co-polyetherester amide family. Suitable co-polyetherester hydrophilic composition may be found in the teachings of US-A-4 493 870 (Vrouenraets) and US-A- 4 725 481 (Ostapachenko). Suitable hydrophilic compositions are described in US-A- 4 2340 838 (Foy et al.). Suitable polyurethanes maybe found in US-A-4 194 041 (Gore). A preferred class of continuous, water vapour permeable polymers are polyurethane, especially those containing oxyethylene units, such as described in US-A- 4 532 316 (Henn). Typically these materials comprise a composition having a high concentration of oxyethylene units to impart hydrophilicity to the polymer. The concentration of oxyethylene units is typically greater than 45% by weight of the base polymer, preferably greater than 60%, most preferably greater than 70%.

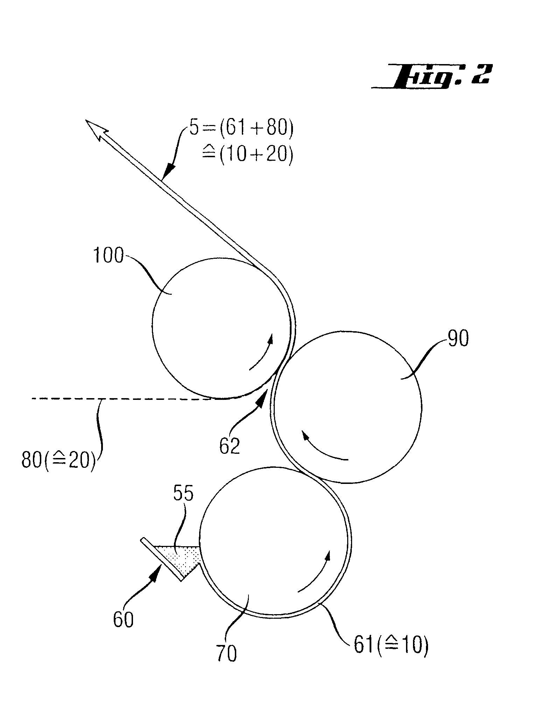

The composite layer 5 used to make the laminate 1 of this invention can be prepared according to the teachings of US-A- 5 026 591 (Henn et al.). This method is illustrated but not limited to the following description of a four roll stack as shown in Fig. 2. Metered control of the molten water vapour permeable polymer 55 is provided for by a gravure roll 70 and a doctor blade/polymer reservoir 60. The water vapour permeable polymer 55 is applied as a thin, continuous liquid film 61 to the continuously moving porous polymer membrane 80 in the nip 62 between two rotating rolls 90, 100; the first one of the rotating rolls 90 having been coated with the liquid polymer and the second one of the rotating rolls 100 providing support so as to force the liquid polymer partially into the porous structure of the polymer membrane 80.

The textile laminate 1 of the current invention may be provided with a backer fabric 40. The backer fabric 40 may be either woven, non-woven or knitted and may be made from a wide variety of materials such as polyester, polyamide (Nylon), polyolefins and the like.

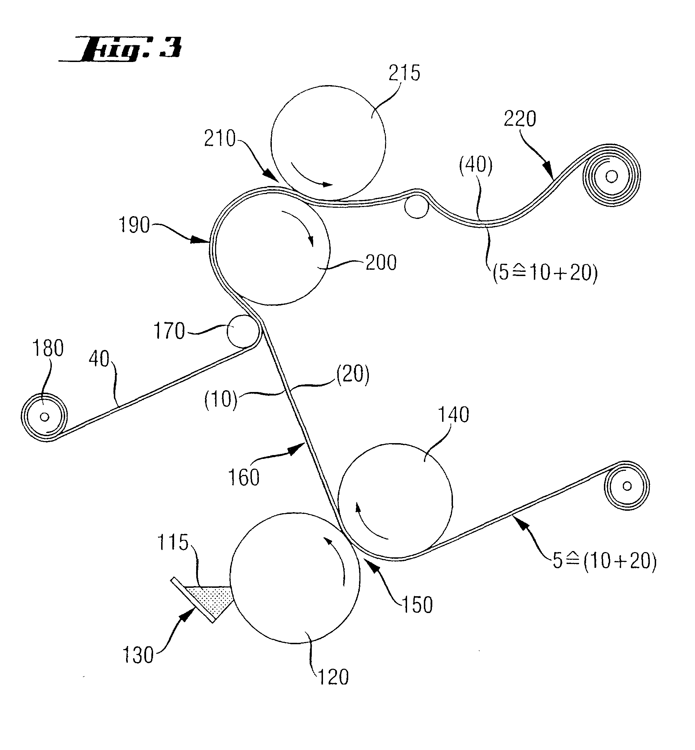

The backer fabric 40 is laminated to the second side of the composite layer 5 by a standard lamination process such as that shown in Fig. 3. In the process, a dot pattern of heat-curing adhesive 115 from a doctor knife/adhesive reservoir 130 is metered onto the second side of the composite layer 5 by a gravure roll 120. The composite layer 5 is held under minimal tension against the gravure roll 120 by a low durometer rubber roll 140 at a pressure sufficient to effect removal of the adhesive dots onto the second side of the composite layer 5.

On exiting a printing nip 150, the adhesive dot coated composite layer 160 is brought to a laminating roll 170 where it is brought in intimate contact with the backer fabric 40 provided from a storage roll 180. The laminate 190 created by the uncured adhesive is then wrapped around a heating roll 200 and heated to a temperature suitable for curing the adhesive, e.g. around 125°C. Upon exiting the nip 210 between the roll 200 and a pressure roll 215 , the laminate 220 is taken up on a storage roll 230.

The bicomponent layer 30 is a woven or knitted textile layer made from strands, filaments, threads, fibres having at least two components or fibre blends. The first component is a material which is stable, i.e. does not melt or otherwise disintegrate, to a high temperature, e.g. around 230°C. The second component is a material with a low melting temperature, e.g. around 110°C. The two components in the knitted or woven bicomponent layer may be made up of two different types of strands, filaments, threads or fibres. More preferably, a bicomponent yarn is used. The bicomponent yarn may have either a core-sheath structure, an "islands-in-the-sea" structure or a "side-by-side" structure. Table 1 shows a number of possible bicomponent yarns which may be used in this invention.

**Table 1**

| **Supplier/ Trade Name** | **Polymers-low/high** | **melting temperature of low melt component** | **structure/ construction** |
|---|---|---|---|
| Hoechst/ Celanese (Trevira "V 721-724") | Co-PET/PET, PE/PET, PP/PET, PA12 or 6/PET PBT | 130 or 170 °C 127 °C 166 °C 178 or 221 °C 227 °C | Bicomponent filament (sheath/core) or filament blend |
| Hänsel / Spunfab | Co-PA, Co-PET 100 % | 95 - 170 °C | Monofil /melt blown 100 % low melting |
| Far Eastern Textile ("EASTLON") | PE/PP, PE/PET, Co-PET/PET | 130 °C 190 °C | sheath/core 10 - 70 % low melting |
| (Du Pont) | PA 6/PA 6.6 | 218 °C | sheath/core |
| EMS-Chemie ("GRILON") | Co-PA/PET | 85 or 140 °C (monofil.) 85 - 160 °C (multifil.) | PET-core (20 %), Co-PA-sheath (80 %) or 100 % low melting |
| Danaklon "AL-Adhesion-C fibres" | PE/PP | 125 - 145 °C | sheath/core |

In the preferred embodiments of the invention, the two components of the knitted or woven textile layer 30 are either polypropylene and polyamide or polypropylene and polyethylene. It appears that polypropylenes obtainable from Asota in Linz, Austria, may offer particular advantages in the invention since they are treated with an anti-bacterial coating. The anti-bacterial coating can reduce sweat smell which is produced by bacteria. In gloves and/or socks the reduction in sweat smell is particularly important. The use of polypropylenes in the invention also allows the use of high frequency (h.f.) or radio frequency (r.f.) welding techniques in order to join two pieces of laminate together.

The woven or knitted textile layer 30 is described in this description as having two components. It should be note that the knitted or woven bicomponent layer may be replaced by a tricomponent layer containing three components or a multi-component layer containing a plurality of components.

A bicomponent or multi-component yarn for use to form the knitted or woven textile layer 30 can be made using a number of prior art techniques. For example, a number of filaments of the different components of the textile layer 30 can be mixed together to form yarn of a given metric number (Nm) or dtex. The metric number (Nm) of a yarn is given by the following formula: Nm = 10 000 / dtex. Typically the metric number is between 70 and 90.

It is thought that using fibres instead of filaments to form the yarn may offer particular advantages since the fibres are of substantially shorter length than the filaments. As a result, the surface of the yarn is "fluffier" and thus a better hand can be formed. The use of fibres allows a greater degree of flexibility in the choice of blend partners and blend ratios. The principles of short fibre spinning are discussed in "Die Kurzstapelspinnerei" by W. Klein published by The Textile Institute.

The multicomponent yarns of the invention can be knitted or woven together using known prior art techniques.

The knitted or woven bicomponent layer 30 is laminated onto the first side of the composite layer 5 or onto the porous polymeric layer 10 by a lamination process similar to that described above with reference to Fig. 3. Care must be taken during the lamination process that the low melting temperature component does not melt during lamination of the knitted or woven bicomponent layer 30 onto the composite layer 5.

The knitted or woven bicomponent layer 30 may additionally include a propellant which produces a gas when activated. Known means for activating the propellant are either heating the activation means or irradiating the propellant by, for example, an electron beam or high frequency electromagnetic radiation. After activation of the propellant and melting of the second low melting temperature component, the gas produced by the propellant produces in combination with the melted low melting temperature component a closed-pore foam as will be described later. Known propellants which may be used in the invention are azodicarbonamide (ADC), ammonium hydrogen carbonate (NH₄CO₃), Toluolsulfohydrazin (TSH) or Diazoaminobenzol.

Several methods are known for ensuring that the propellant is inserted into the layer.

In the first method, the propellant is added to the master batch from which at least one of the fibres forming the knitted or woven bicomponent layer 30 is to be spun. The blend of propellant and fibre material is subsequently spun conventionally using a nozzle.

A second method includes adding the propellant as a powder to the spinning extruding in the nozzle prior to the spinning of one of the fibres forming the knitted or woven bicomponent layer 30. In both the first and second method, the propellant is evenly distributed throughout the cross-section of the fibre. The propellant is thus integrally incorporated within the fibre.

A third method involves coating a monofilament or a multifilament yarn as it passes a nozzle. An extruder presses a hot melt containing a propellant which flows around the yarn and coats the yarn. Using this method only the core of the yarn is coated with the low melting component and the propellant.

In the preferred embodiment of the invention, the propellant is heat-activated and the activation temperature is chosen to be at least around 20°C higher than the melting temperature of the low melting temperature component. The activation temperature is furthermore chosen to be substantially below the melting temperature of the high melting temperature component.

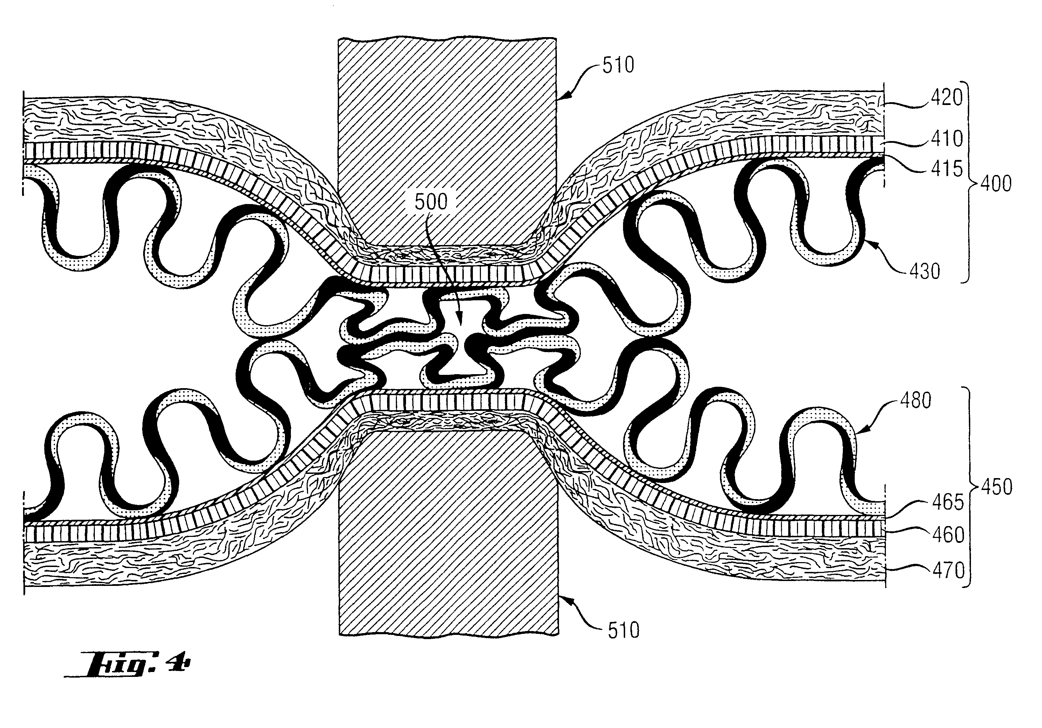

The textile laminate 1 of the invention is particularly useful in applications in which two textile laminates have to be joined or fused together as is illustrated in Fig. 4. In this example a first textile laminate 400 is to be joined to a second textile laminate 450. The first textile laminate 400 comprises a first composite layer 410 including a porous polymeric layer 415, a first backer fabric 420 laminated to the second side of the first composite layer 410 and a first knitted or woven bicomponent layer 430 laminated to the first side of the first composite layer 410. The second textile laminate 450 comprises a second composite layer 460 including a porous polymeric layer 465, a second backer fabric 470 laminated to the second side of the second composite layer 460 and a second knitted or woven bicomponent layer 480 laminated to the first side of the second composite layer 480. The first textile laminate 400 is to be joined at a seam 500 to the second textile laminate 450 using a heat seal die 510. Use of the propellant to create a foam at the seam 500 creates a seam which is substantially waterproof.

In Fig. 4, it should be observed that the knitted or woven bicomponent layers 430 and 480 are depicted immediately before melting.

The temperature of the heat seal die is chosen to be greater than that of the melting temperature of the second low melting temperature component of the knitted or woven bicomponent layers 400 and 450 but to be below the melting temperature of the first component of the knitted or woven bicomponent layers 430 and 480. In the preferred embodiment of the invention the heat seal die is at a temperature of 190°C. At this temperature the low melting temperature components in the knitted or woven bicomponent layers 430 and 480 melt and, due to the pressure exerted on the textile laminates 400 and 450 by the heat seal die, the knitted or woven bicomponent layers 430 and 480 fuse together.

The low melting component fills the gaps in the knitted or woven bicomponent layer 430 between the structure formed by the fibres having a higher melting temperature. The higher melting temperature fibres serve therefore two functions. Firstly they provide mechanical strength to the seam. Secondly they act as a "gap-keeper" or spacer to ensure that the lower melting temperature fibres in the molten state do not seep out of the seam 500

If a propellant is included in the knitted or woven bicomponent layer 430, 480, then this is activated by the heat produced by the heat seal die and a closed cell foam is produced at the seam 500. Temperature is applied to a sufficiently wide area of the seam 500 for a sufficient length of time to ensure that the seam is watertight. Typically the seam would have a width of 1-3 mm and the temperature would be applied at 190°C for 1-10 seconds.

The function of the two components in the knitted or woven bicomponent layers 430 and 480 can be easily understood from Fig. 4. The first component provides mechanical strength to the seam 500 since it neither melts nor otherwise disintegrates at the temperature to which the seam 500 is subjected by the heat seal die 510. The second (low melting temperature) component provides the adhesive between the two laminates 400 and 450. If a propellant is used, then the second component together with the first component provides the walls of the cells of the closed-pore foam with sufficient strength to carry any load to which the seam 500 is subjected. Furthermore, the second component imparts sufficient wall strength to the individual cells to prevent them from connecting with each other to prevent them from providing a leak path through the seam 500 during flexing of the laminates 400, 450.

An advantage of using the propellant to form the close-cell foam is that the seam thus created is substantially more flexible and softer to touch than a seam formed without the foam created by the molten second component with the propellant.

The seam is deemed to be watertight when the water entry pressure of the seam is greater than 0,13 bar when measured using the suture test as explained above.

In the example illustrated in Fig. 4, it is assumed that the knitted or woven bicomponent layers 430 and 480 are fused to each other.

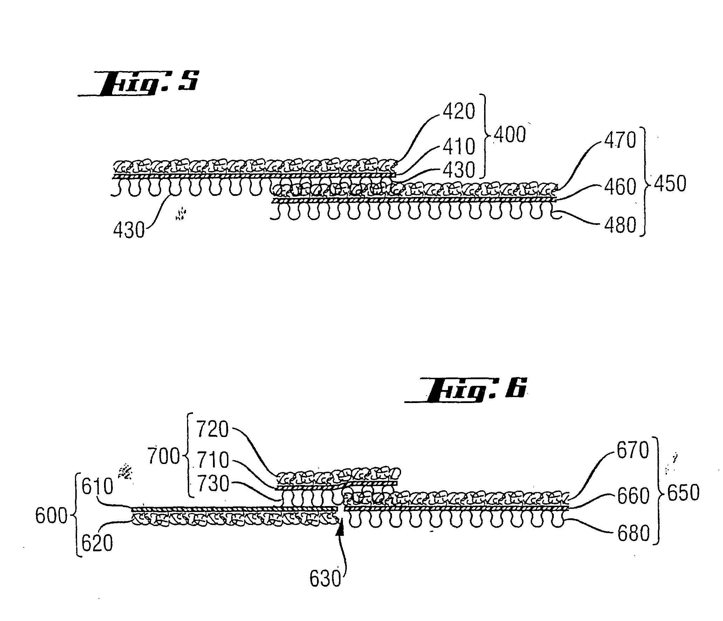

It is also possible to fuse a knitted or woven bicomponent layer 430, 480 directly to one of the backer fabrics 470 or 420 as is shown in Fig. 5 in which the components of the textile laminates are given the same numerals as their counterparts in Fig. 4. Use of the propellant in this example has the advantage that the molten second component is "blown" into the backer fabric 420, 470, thus creating a substantially more watertight seam.

A further application of the invention is depicted in Fig. 6 in which a two layer textile laminate 600 comprising a composite layer 610 and a backer fabric 620 is to be joined to a three layer textile laminate 650 with a composite layer 660, a first backer fabric 670 on a first side of the composite layer 660 and a second backer fabric 680 on a second side of the composite layer 660. A seam 630 between the two layer textile laminate 600 and the three layer textile laminate 650 is sealed by a tape 700 made from the textile laminate according to the invention. The textile laminate has a composite layer 710 with a backer fabric 720 on the side of the composite layer 710 facing away from the seam and a knitted or woven bicomponent layer 730 on the side of the composite layer 710 facing the seam 630.

### Examples

### Example 1

A yarn formed of polypropylene and polyamide 6.6 fibers (each component approx 50% by volume) was blended in the facilities of the Institut für Textil- und Verfahrenstechnik in Denkendorf, Germany, using machines supplied by Rieter Machine Works, Winterthur, Switzerland to produce a yarn of Nm 85. This yarn was knitted to form a knit of weight approximately 80 g/m² and the knit was then laminated onto a functional layer comprising expanded PTFE coated with a polyurethane coating using the lamination techniques described above.

Two pieces of the laminate thus formed are joined together using the heat seal die shown in Fig 4. at a temperature of around 200°C and a seam of a width of approximately 1 mm between the two pieces of laminate is thus formed. The seam is watertight to a water entry pressure of greater than 0.13 bar as measured using the test methods described above.

### Example 2

This is manufactured in the same manner except that instead of a polyamide filament a polyester filament is used to form the yam. The seam formed from heat sealing two pieces of the laminate is watertight to a water entry pressure of greater than 0.13 bar and has a width of less than 3 mm.

### Example 3

A bicomponent layer is made of a knit comprising co-polyester fibre with a low melting temperature of 130°C and a polyester fibre with a high melting temperature of 240°C. The bicomponent layer is laminated onto a composite layer consisting of expanded PTFE with a polyurethane coating using the lamination process described above.

### Example 4

This is the same as example 1 except that a propellant of azodicarbonamide is coated onto the knit. The seam produced between the two pieces of laminate is watertight to a water entry pressure of greater than 0.13 bar.

### Example 5

This is the same as example 2 except that a propellant of azodicarbonamide is coated onto the knit. The seam produced between the two pieces of laminate is watertight to a water entry pressure of greater than 0.13 bar.

### Example 6

A knit supplied by Borgini in Como, Italy, under the trade name CAMP, was laminated to a functional layer comprising ePTFE coated with a polyurethane using the lamination techniques described above. The knit was formed of two separate filament yarns, 50 % weight polyethyleneterephthalate and 50 % weight polybutyleneterephthalate.

## Claims

1. Laminate (1) with at least
a first layer (5) comprising a waterproof and breathable functional layer (10, 20). and a second knitted or woven layer (30) laminated to said first layer (5) and comprising at least a first component and a second component, the first component being stable to a first temperature and the second component melting at a second temperature, wherein the first temperature is higher than the second temperature.

2. Laminate according to claim 1, whereby
the second knitted or woven layer further includes a propellant which is activatable by activation means.

3. Laminate according to claim 1, whereby
the second component is meltable at a temperature in the range from 80°C to 170°C.

4. Laminate according to claim 1, whereby
the first component is stable to a temperature of at least 140°C.

5. Laminate according to claim 1 whereby
the difference in temperature between the first temperature and the second temperature is at least 20°C.

6. Laminate according to claim 1, wherein
the second layer (30) is composed of a plurality of yams in the form of strands, filaments, threads or fibres.

7. Laminate according to claim 1, wherein the second component is a thermoplastic.

8. Laminate according to claim 7 wherein the second component is selected from the group of thermoplastics comprising copolyester, polyamide, copolyamide, polybutyleneterephtha!ate or polyolefin.

9. Laminate according to claim 8 wherein the second component is polyethylene or polypropylene.

10. Laminate according to claim 8 wherein the second component is a polyamide 6.0.

11. Laminate according to claim 1 wherein the first component is selected from the group of polymers comprising polypropylene and polyamide 6.6.

12. Laminate according to claim 11 wherein the first component is a polypropylene.

13. Laminate according to claim 12 wherein the polypropylene is treated to be anti-bacterial.

14. Laminate according to claim 6 wherein the yarn has a bicomponent structure comprising the first component and the second component.

15. Laminate according to claim 14 wherein the yarn has a cover-core structure, wherein the second component forms the cover.

16. Laminate according to claim 14 wherein the strand has a "side-by-side" structure

17. Laminate according to claim 8 wherein the second component is a blend of yarns.

18. Laminate according to claim 17 wherein the yam is comprised of fibres.

19. Laminate according to claim 2 wherein the propellant after activation generates a closed cell foam with the second component after melting.

20. Laminate according to claim 2 wherein the propellant is activated at a third temperature, the third temperature being intermediate between the second temperature and the first temperature.

21. Laminate according to claim 2, wherein the propellant is an integral part of the second component.

22. Laminate according to claim 2, wherein the propellant is selected from the group of propellants consisting of azodicarbonamide, ammonium hydrogen carbonate, toluolsulfohydrazin or diazoaminobenzol.

23. Laminate according to claim 22 wherein the propellant is azodicarbonamide.

24. Laminate according to claim 1 wherein the functional layer (5) is a membrane or a film .

25. Laminate according to claim 24 wherein the functional layer (5) is selected from the group of materials consisting of polyesters, polyamide, polyolefins, polyvinylchloride, polyketones; polysulfones, polycarbonates, fluoropolymers including polytetrafluoroethylene, polyacrylates, polyurethanes, copolyetheresters, copolyetheramides.

26. Laminate according to claim 25 wherein the functional layer (5) is made from expanded PTFE.

27. Laminate according to claim 1 wherein the water vapour transmission rate of the laminate (1) is less than 150 m².Pa/m.

28. Laminate according to claim 1 wherein the water entry pressure of a laminate (1) is greater than 0.13 bar.

29. A combination of a first laminate (400) according to any of the above claims and a substrate (450, 650) which is joined to said laminate (400) at a seam (500).

30. The combination according to claim 29 wherein the substrate (450, 650) is a second laminate according to claims 1 through 25.

31. The combination according to claim 30 wherein the second layer (430) of the first laminate (400) is joined to the second layer (480) of the second laminate (450).

32. The combination according to claim 29 wherein the substrate is a backer fabric (40).

33. The combination according to claim 29 wherein the water entry pressure of the seam is greater than 0,13 bar

34. Articles of clothing made from the laminates of any of claims 1 to 28.

## Patentansprüche

1. Laminat (1) mit mindestens einer ersten Schicht (5) umfassend eine wasserdichte und atmungsaktive Funktionsschicht (10, 20) und einer zweiten gestrickten oder gewebten Schicht (30), welche an die erste Schicht (5) laminiert ist und mindestens eine erste Komponente und eine zweite Komponente umfasst, wobei die erste Komponente beständig gegenüber einer ersten Temperatur ist und die zweite Komponente bei einer zweiten Temperatur schmilzt, wobei die erste Temperatur höher als die zweite Temperatur ist.

2. Laminat nach Anspruch 1, wobei die zweite gestrickte oder gewebte Schicht des weiteren ein Treibgas enthält, welches durch Aktivierungsmittel aktivierbar ist.

3. Laminat nach Anspruch 1, wobei die zweite Komponente bei einer Temperatur im Bereich zwischen 80°C und 170°C schmelzbar ist.

4. Laminat nach Anspruch 1, wobei die erste Komponente gegenüber einer Temperatur von mindestens 140°C beständig ist.

5. Laminat nach Anspruch 1, wobei die Temperaturdifferenz zwischen der ersten Temperatur und der zweiten Temperatur mindestens 20°C beträgt.

6. Laminat nach Anspruch 1, wobei sich die zweite Schicht (30) aus einer Vielzahl von Garnen in der Art von Litzen, Filamenten, Fäden oder Fasern zusammensetzt.

7. Laminat nach Anspruch 1, wobei die zweite Komponente ein Thermoplast ist.

8. Laminat nach Anspruch 7, wobei die zweite Komponente aus der Gruppe von Thermoplasten umfassend Copolyester, Polyamid, Co-Polyamid, Polybutyleneterephthalat oder Polyolefin gewählt wird.

9. Laminat nach Anspruch 8, wobei die zweite Komponente Polyethylen oder Polypropylen ist.

10. Laminat nach Anspruch 8, wobei die zweite Komponente ein Polyamid 6.0 ist.

11. Laminat nach Anspruch 1, wobei die erste Komponente aus der Gruppe von Polymeren umfassend Polypropylen und Polyamid 6.6 gewählt wird.

12. Laminat nach Anspruch 11, wobei die erste Komponente ein Polypropylen ist.

13. Laminat nach Anspruch 12, wobei das Polypropylen behandelt ist, um antibakteriell zu sein.

14. Laminat nach Anspruch 6, wobei der Garn eine Zweikomponentenstruktur besitzt, welche die erste Komponente und die zweite Komponente umfasst.

15. Laminat nach Anspruch 14, wobei der Garn eine Kernabdeckstruktur besitzt, wobei die zweite Komponente die Abdeckung bildet.

16. Laminat nach Anspruch 14, wobei die Litze eine "side-by-side" -Struktur besitzt.

17. Laminat nach Anspruch 8, wobei die zweite Komponente eine Mischung von Garnen ist.

18. Laminat nach Anspruch 17, wobei der Garn aus Fasern zusammengesetzt ist.

19. Laminat nach Anspruch 2, wobei das Treibgas nach der Aktivierung einen geschlossenzelligen Schaumstoff mit der zweiten Komponente nach dem Schmelzen generiert.

20. Laminat nach Anspruch 2, wobei das Treibgas bei einer dritten Temperatur aktiviert wird, wobei die dritte Temperatur zwischen der zweiten Temperatur und der ersten Temperatur liegt.

21. Laminat nach Anspruch 2, wobei das Treibgas ein integraler Bestandteil der zweiten Komponente ist.

22. Laminat nach Anspruch 2, wobei das Treibgas aus der Gruppe von Treibgasen gewählt wird, welche aus Azodicarbonarnid, Ammoniumwasserstoffcarbonat, Toluolsulfohydrazin oder Diazoaminaobenzol bestehen.

23. Laminat nach Anspruch 22, wobei das Treibgas Azodicarbonamid ist.

24. Laminat nach Anspruch 1, wobei die Funktionsschicht (5) eine Membran oder eine Folie ist.

25. Laminat nach Anspruch 24, wobei die Funktionsschicht (5) aus der Gruppe von Materialien gewählt wird, welche aus Polyester, Polyamid, Polyolefin, Polyvinylchlorid, Polyketon, Polysulfon, Polycarbonat, Fluorpolymer einschließlich Polytetrafluorethylen, Polyacrylat, Polyurethan, Co-Polyetherester, Co-Polyetheramid bestehen.

26. Laminat nach Anspruch 25, wobei die Funktionsschicht (5) aus gerecktem PTFE hergestellt ist.

27. Laminat nach Anspruch 1, wobei die Wasserdampf-Durchgangsrate des Laminats (1) geringer als 150 m².Pa/m ist.

28. Laminat nach Anspruch 1, wobei der Wassereintrittsdruck des Laminats (1) größer als 0,13 bar ist.

29. Eine Kombination eines ersten Laminats (400) nach einem der vorhergehenden Ansprüche und einem Substrat (450, 650), welches mit dem Laminat (400) an einer Naht (500) verbunden ist.

30. Kombination nach Anspruch 29, wobei das Substrat (450, 650) ein zweites Laminat entsprechend der Ansprüche 1 bis 25 ist.

31. Kombination nach Anspruch 30, wobei die zweite Schicht (430) des ersten Laminats (400) mit der zweiten Schicht (480) des zweiten Laminats (450) verbunden ist.

32. Kombination nach Anspruch 29, wobei das Substrat ein "Backer"-Gewebe (40) ist.

33. Kombination nach Anspruch 29, wobei der Wassereintrittsdruck der Naht größer als 0,13 bar ist.

34. Kleidungsartikel, welche aus dem Laminat nach einem der Ansprüche 1 bis 28 hergestellt sind.

## Revendications

1. Stratifié (1) avec au moins
une première couche (5) comprenant une couche fonctionnelle imperméable et respirante (10, 20) et une seconde couche tricotée ou tissée (30) laminée à ladite première couche (5), et comprenant au moins un premier composant et un second composant, le premier composant étant stable à une première température et le second composant fusionnant à une deuxième température, dans lequel la première température est supérieure à la deuxième température.

2. Stratifié selon la revendication 1, **caractérisé en ce que**
la seconde couche tricotée ou tissée comprend en outre un propulseur qui est activable par des moyens d'activation.

3. Stratifié selon la revendication 1, **caractérisé en ce que**
le second composant est fusionnable à une température comprise dans la plage avant de 80 à 170°C

4. Stratifié selon la revendication 1, **caractérisé en ce que**
le premier composant est stable à une température d'au moins 140°C.

5. Stratifié selon la revendication 1, **caractérisé en ce que**
la différence de température entre la première température et la deuxième température est d'au moins 20°C.

6. Stratifié selon la revendication 1, dans lequel
la seconde couche (30) est composée d'une pluralité de fils sous la forme de brins, de filaments, de fils ou de fibres.

7. Stratifié selon la revendication 1, dans lequel le second composant est un thermoplastique.

8. Stratifié selon la revendication 7, dans lequel le second composant est choisi dans le groupe des thermoplastiques comprenant un copolyester, un polyamide, un copolyamide, le polybutylènetéréphtalate ou une polyoléfine.

9. Stratifié selon la revendication 8, dans lequel le second composant est le polyéthylene ou le polypropylène.

10. Stratifié selon la revendication 8, dans lequel le second composant est un polyamide 6.0.

11. Stratifié selon la revendication 1, dans lequel le premier composant est choisi dans le groupe des polymères comprenant le polypropylène et le polyamide 6.6.

12. Stratifié selon la revendication 11, dans lequel le premier composant est un polypropylène.

13. Stratifié selon la revendication 12, dans lequel le polypropylène est traité pour être un antibactérien.

14. Stratifié selon la revendication 6, dans lequel le fil a une structure de biocomposant comprenant le premier composant et le second composant.

15. Stratifié selon la revendication 14, dans lequel le fil a une structure de coeur de couverture, dans lequel le second composant forme la couverture.

16. Stratifié selon la revendication 14, dans lequel le brin a une structure "côté-par-côté".

17. Stratifié selon la revendication 8, dans lequel le second composant est un mélange de fils.

18. Stratifié selon la revendication 17, dans lequel le fil comprend des fibres.

19. Stratifié selon la revendication 2, dans lequel le propulseur après activation produit une mousse de cellules fermées avec le second composant après fusion.

20. Stratifié selon la revendication 2, dans lequel le propulseur est activé à une troisième température, la troisième température étant intermédiaire entre la deuxième température et la première température.

21. Stratifié selon la revendication 2, dans lequel le propulseur est une partie intégrante du second composant.

22. Stratifié selon la revendication 2, dans lequel le propulseur est choisi dans le groupe des propulseurs constitué de l'azodicarbonamide, de l'hydrogénocarbonate d'ammonium, de la toluosulfohydrazine ou du diazaaminobenzol.

23. Stratifié selon la revendication 22, dans lequel le propulseur est l'azodicarbonamide.

24. Stratifié selon la revendication 1, dans lequel la couche fonctionnelle (5) est une membrane ou un film.

25. Stratifié selon la revendication 24, dans lequel la couche fonctionnelle (5) est choisie dans le groupe des matériaux constitué des polyesters, du polyamide, des polyoléfines, du chlorure de polyvinyle, des polycétones, des polysulfones, des polycarbonates, des fluoropolymères comprenant le polytétrafluoroéthylène, les polyacrylates, les polyuréthannes, les copolyétheresters, les copolyétheramides.

26. Stratifié selon la revendication 25, dans lequel la couche fonctionnelle (5) est fabriquée à partir de PTFE expansé.

27. Stratifié selon la revendication 1, dans lequel la vitesse de transmission de vapeur d'eau du stratifié (1) est inférieure à 150 m².Pa/m.

28. Stratifié selon la revendication 1, dans lequel la pression d'entrée d'eau d'un stratifié (1) est supérieure à 0,13 bar.

29. Combinaison d'un premier stratifié (400) selon l'une quelconque des revendications précédentes et d'un substrat (450, 650) qui est joint audit stratifié (400) à une couture (500).

30. Combinaison selon la revendication 29, dans laquelle le substrat (450, 650) est un second stratifié selon les revendications 1 à 25.

31. Combinaison selon la revendication 30, dans laquelle la seconde couche (430) du premier stratifié (400) est jointe à la seconde couche (480) du second stratifié (450).

32. Combinaison selon la revendication 29, dans laquelle le substrat est un tissu de support (40).

33. Combinaison selon la revendication 29, dans laquelle la pression d'entrée d'eau de la couture est supérieure à 0,13 bar.

34. Articles de vêtement fabriqués à partir des stratifiés selon l'une quelconque des revendications 1 à 28.
